(19) **Europäisches Patentamt**
**European Patent Office**
**Office européen des brevets**

(11) **EP 2 226 613 B1**

(12) **EUROPEAN PATENT SPECIFICATION**

(45) Date of publication and mention
of the grant of the patent:
**16.02.2011 Bulletin 2011/07**

(51) Int Cl.:
**G01D 5/38** (2006.01)

(21) Application number: **09382027.2**

(22) Date of filing: **02.03.2009**

(54) **Readhead for an optical position measuring device**

Lesekopf für ein optisches Positionsmessgerät

Tête de lecture pour un dispositif de mesure optique de position

(84) Designated Contracting States:
**AT BE BG CH CY CZ DE DK EE ES FI FR GB GR HR HU IE IS IT LI LT LU LV MC MK MT NL NO PL PT RO SE SI SK TR**

(43) Date of publication of application:
**08.09.2010 Bulletin 2010/36**

(73) Proprietor: **Fagor, S. Coop.**
**20500 Mondragon (Gipuzkoa) (ES)**

(72) Inventors:
• **Morlanes Calvo, Tomás**
**01011 Vitoria-Gasteiz (ES)**

• **de la Peña Azarola, José Luis**
**39005 Santander (ES)**
• **Oti González, José Emilio**
**39001 Santander (ES)**

(74) Representative: **Igartua, Ismael et al**
**Fagor S.Coop**
**Jabetza Industriala**
**San Andrés Auzoa, z/g. - P.O. Box 67**
**20500 Arrasate-Mondragón (Gipuzkoa) (ES)**

(56) References cited:
**EP-A- 0 484 104       DE-A1- 10 000 955**
**DE-C1- 3 322 738       GB-A- 2 095 399**
**US-A- 5 861 953       US-B2- 7 289 229**

## Description

TECHNICAL FIELD

The present invention relates to readheads for measuring devices that also comprise a graduated scale, the readhead being movable with respect to said graduated scale and being capable of determining said movement.

PRIOR ART

Readheads for measuring devices are known from prior art, such as those disclosed in the applicant's patent documents EP1722200B1 and EP1775558A1. Said readheads are movable with respect to a graduated scale of the device in a direction of movement parallel to said graduated scale, the device being designed to determine the relative position of said readhead in relation to said graduated scale in said direction of movement.

Readheads of this type generally comprise at least one graduated grating with a determined period, a light emitter that emits a light beam to light the graduated scale, and an analyser that receives at least part of the light transmitted or reflected on said graduated scale, from which it is capable of generating electrical signals that may be used to determine the movement of the readhead in relation to said graduated scale. The graduated scale comprises a plurality of periodic marks and the light emitter lights said graduated scale through the graduated grating, the interaction between the graduated grating and the graduated scale thereby generating a distribution of light with a period of modulation that is projected in a determined plane in relation to the graduated scale, in the vicinity of which the analyser should be disposed, as described, for example, in document EP0207121B1.

The period of said distribution of projected light and the distance in relation to the graduated scale to which it is generated depend on the period of graduation of the graduated grating, on the periodic marks of the graduated scale and on the relative distance between both elements. In addition, it is known that the depth of field of said light projections is proportional to their periods, with the result that the positioning of the analyser in the ideal position becomes more critical the smaller the period of the projection to be analysed by said analyser system.

Furthermore, the demanding levels of accuracy required in these types of devices necessitate that both the graduated grating and the modulated distribution of projected light are positioned or generated as close as possible to the graduated scale.

However, it is not always possible, or easy, to dispose the analyser at the distance in relation to the graduated scale at which the projected light presents the required contrast and modulation, either for the reasons given above or because the physical presence of the analyser can hamper the lighting of the graduated scale and cause unwanted shadows, it then being necessary to dispose said analyser in a position further away from the graduated scale.

BRIEF DISCLOSURE OF THE INVENTION

It is an object of the invention to provide a readhead for measuring devices that enables the arrangement of the analyser in an arbitrary position that allows an optimal projection of light to be received in an environment in which its arrangement does not affect the lighting of the graduated scale or cause unwanted shadows, thereby ensuring that the accuracy requirements for this type of devices are maintained.

The readhead of the invention comprises a graduated grating with a determined period, a light emitter to light a graduated scale of the device through the graduated grating, thereby generating a first interaction between said first graduated grating and the graduated scale which produces a distribution of light with a period of modulation that is observed at a determined distance with respect to said graduated scale and which moves proportionally as said readhead moves in relation to said graduated scale, and an analyser to receive at least part of the light emitted by the emitter after being transmitted or reflected on the graduated scale.

The readhead of the invention also comprises a second graduated grating that is disposed at a second distance with respect to said graduated scale substantially equal to the determined distance, and which comprises a second period that is slightly different and close to the period of modulation, there resulting at said second distance and as a result of the spatial superimposition between the second period and the period of modulation, a distribution of light that corresponds with an image of the graduated scale, with a period of image substantially greater than the incremental period of said graduated scale and which moves proportionally as the readhead moves in relation to the graduated scale. Said readhead also comprises a third graduated grating with a third period substantially greater than the period of the graduated scale, which is disposed between the emitter and the first graduated grating at a third distance with respect to the plane where the second graduated grating is disposed, and which is lit by the light emitter, thereby a second interaction being generated between the third grating and the image of the graduated scale with period of image, a distribution of light with a period of reading that is observed at a determined distance in relation to the plane where the image of said graduated scale with period of image may be found being obtained as a result of this second interaction, which moves proportionally as said readhead moves in relation to said graduated scale, the analyser being disposed in, or approximately in, the plane where the distribution of light with the period of reading is obtained.

As a result, at a determined distance in relation to the plane where the second graduated grating is disposed, a projection of light image of the movement of the readhead in relation to said graduated scale is obtained. The analyser being disposed in said position or in its vicinity it is assure that said analyser receives a light representative of the movement of the readhead in relation to the graduated scale, a possible new arrangement of the analyser that is further away from the graduated scale thus being obtained, therefore the elimination or reduction of the risk of the physical presence of said analyser obstructing the lighting of the graduated scale and/or causing unwanted shadows on said graduated scale being enabled.

These and other advantages and characteristics of the invention will be made evident in the light of the drawings and the detailed description thereof.

DESCRIPTION OF THE DRAWINGS

Figure 1 shows an embodiment of the readhead of the invention.

Figure 2 shows a first preferred embodiment of the readhead of the invention.

Figure 3 shows a third embodiment of the readhead of the invention.

Figure 4 shows a fourth embodiment of the readhead of the invention.

DETAILED DISCLOSURE OF THE INVENTION

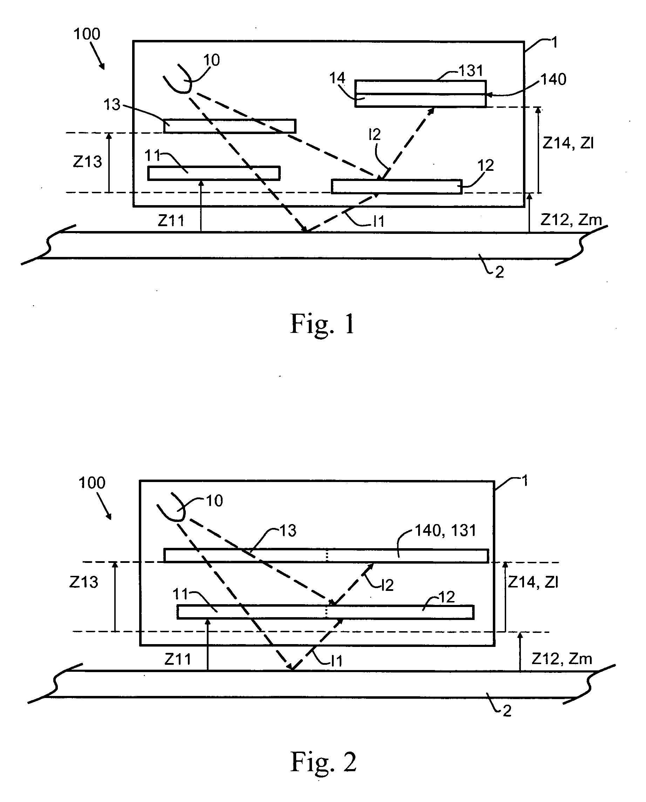

Figure 1 shows an embodiment of the readhead 1 of the invention, which is designed for being used in measuring devices 100. Said devices 100 comprise, in addition to the readhead 1, a graduated scale 2 that comprises a plurality of periodic marks (not shown in the figures) arranged in a direction of movement X with a determined incremental period P2, said readhead 1 being movable in relation to the graduated scale 2 in the direction of movement X that is substantially parallel to said graduated scale 2. The readhead 1 comprises a first graduated grating 11 with a first period P11 that is disposed at a first distance Z11 with respect to the graduated scale 2, a light emitter 10 to light the graduated scale 2 through the graduated grating 11, and an analyser 140 that receives at least part of the light that passes through or is reflected on the graduated scale 2 and which is designed to generate electrical signals in accordance with the light received, said electrical signals being capable of being used to determine the movement of the readhead 1 in relation to the graduated scale 2. Preferably the analyser 140 receives the light that is reflected on the graduated scale 2, and hereinafter the detailed disclosure shall refer to this arrangement (and the figures). However, the invention is not restricted to this arrangement, it being also capable of being used in the event that the analyser 140 receives the light that passes through said graduated scale 2 instead of the light that is reflected on it.

When the readhead 1 moves in relation to the graduated scale 2 in the direction of movement X, as a result of a first interaction I1 between the first graduated grating 11 and the graduated scale 2 a distribution of light is obtained at a determined distance Zm with respect to said graduated scale 2, which presents a modulation with a period of modulation Pm and which moves proportionally as the readhead 1 moves in relation to the graduated scale 2. Said period of modulation Pm and the determined distance Zm are determined by the following equations:

$$Pm = \frac{P11 * P2}{n * P2 - m * P11}$$

$$Zm = Z11 * \frac{n * Pm}{P11}$$

Where:

P2 --> Incremental period of the graduated scale 2.
P11 --> Period of the first graduated grating 11.
Pm --> Period of modulation.
Z11 --> Distance between the graduated grating 11 and the graduated scale 2.
Zm --> Distance with respect to the graduated scale 2 where the projection of light with the period of modulation Pm is generated.
n and m --> Whole numbers, which preferably correspond with 1 and with -1 respectively.

The first distance Z11 also corresponds, preferably, with a whole multiple of a Talbot distance T, with the result that a maximum contrast of the light modulated with the period of modulation Pm is obtained. The Talbot distance T is defined by the following equation:

$$T = P11 * P2 / (n * m * \lambda)$$

Where:

P2 --> Incremental period of the graduated scale 2.
P11 --> Period of the first graduated grating 11.
$\lambda$ --> Wavelength of the light emitted by the emitter 10.
n and m -> Whole numbers, which preferably correspond with 1 and with -1 respectively.

The readhead 1 of the invention also comprises a second graduated grating 12 that is disposed at a second distance Z12 in relation to the graduated scale 2 substantially equal to the determined distance Zm and which comprises a second period P12 slightly different and close to the period of modulation Pm, with the result that, due to the superimposition of the second period P12 and of the period of modulation Pm, at said second distance Z12 with respect to the graduated scale 2 a new distribution of modulated light is obtained, which corresponds with an image of said graduated scale 2, but with a period of image Pi substantially greater than the incremental period P2 of said graduated scale 2, and which moves proportionally as the readhead 1 moves in relation to the graduated scale 2. Said period of image Pi is defined by the following equation:

$$Pi = \frac{Pm * P12}{Pm - P12}$$

Where:

Pi --> Period of the image of the graduated scale 2.
P12 --> Period of the second graduated grating 12.
Pm --> Period of modulation.

As a result, the movement of an incremental period P2 of the readhead 1 in relation to the graduated scale 2 corresponds with the movement of a period of image Pi of the image of said graduated scale 2.

The readhead 1 also comprises a third graduated grating 13 with a third period P13 in the order of the period of the image Pi and substantially greater than the period of the graduated scale P2, which is disposed between the emitter 10 and the graduated grating 11 at a third distance Z13 with respect to the plane where the second graduated grating 12 is disposed, with the result that the light that is emitted by the emitter 10 and which passes through the third grating 13 interacts with the image of the graduated scale 2, which is obtained on the plane in which the second grating 12 is disposed, with, as a result of said second interaction I2, a distribution of light with a period of reading PI being obtained, which is observed at an additional distance ZI with respect to the plane where said second graduated grating 12 is disposed and which moves proportionally as the image of the graduated scale 2 moves, which in turn moves proportionally as the readhead 1 moves in relation to the graduated scale 2. As a result, the movement of an incremental period P2 of the readhead 1 in relation to the graduated scale 2 corresponds with the movement of a period of reading PI. The period of reading PI and the additional distance ZI in relation to the image of graduated scale 2 at which said period of reading PI is generated depend on the third period P13, on the period of image Pi, and on the third distance Z13 with respect to said image of the graduated scale 2 at which said third graduated grating 13 is disposed:

$$PI = \frac{P13 * Pi}{n'*Pi - m'*P13}$$

$$ZI = Z13 * \frac{n'*PI}{P13}$$

Where:

P13 --> Period of the third graduated grating 13.
Pi --> Period of the image of the graduated scale.
PI --> Period of reading.
Z13 --> Distance between the third grating 13 and the plane where the image of the graduated scale is generated.
ZI --> Distance with respect to the plane where the image of the graduated scale is generated where the light modulated with the period of reading PI is observed.
n' and m' --> Whole numbers, which preferably correspond with 1 and with - 1 respectively.

The specific position ZI where the analyser 140 is disposed thus depends on the distance between the grating 13 and the image of the graduated scale 2 and not on the distance between the readhead 1 and the graduated scale 2.

The analyser 140 preferably comprises photodetector means 131 with a matrix of structured photodiodes (not shown in the figures), with a specific fourth period P14, designed to accept and generate electrical signals reflecting the movement of the readhead 1 from the distribution of light with the period of reading PI. Said analyser 140 may also comprise, instead of the matrix of structured photodiodes, the photodetector means 131 which transform the light they receive into electrical signals that may be used to determine the movement of the readhead 1 in relation to the graduated scale 2 and a fourth graduated grating 14 with the fourth period P14, in order to adapt the period of reading PI to a period that may be accepted by the photodetector means 131.

In a first preferred embodiment shown in figure 2, the emitter 10 lights the graduated scale 2 obliquely, and the first and second graduated gratings 11 and 12 face said graduated scale 2. The first period P11 of the first graduated grating 11 is preferably equal to two times the incremental period P2 of the graduated scale 2, and the second period is different but close to said first period P11, both gratings 11 and 12 being disposed at a same distance Z11, Z12 in relation to the graduated scale 2 forming a single element. The analyser 140 also comprises a matrix of structured photodiodes arranged according to a fourth period P14, said matrix of photodiodes and the third grating 13 being disposed at a same distance Z14, Z13 with respect to the plane where the image of the graduated scale 2 is generated with the period of image Pi. In said preferred embodiment, the incremental period P2 of the graduated scale is approximately equal to 20 microns and the first period P11 approximately equal to 40 microns, a period of modulation Pm of 40 microns being obtained. The second period P12 is approximately equal to 34.5 microns, a period of image Pi approximately equal to 250 microns being obtained. The third and fourth period P13 and P14 are approximately equal to 500 microns.

In a second preferred embodiment, the first period P11 and the second period P12 may be equal and slightly different and close to two times the incremental period P2, said periods P11 and P12 being capable of being smaller or greater than said incremental period P2 (incremental period P2 of 20 microns and periods P11 and P12 approximately equal to 37 or 43.5 microns, for example), the periods P13 and P14 remaining approximately equal to 500 microns. Of course, instead of 500 microns they may also have different periods and may even be placed at different distances with respect to the plane where the image of the graduated scale 2 with the period of image Pi is generated.

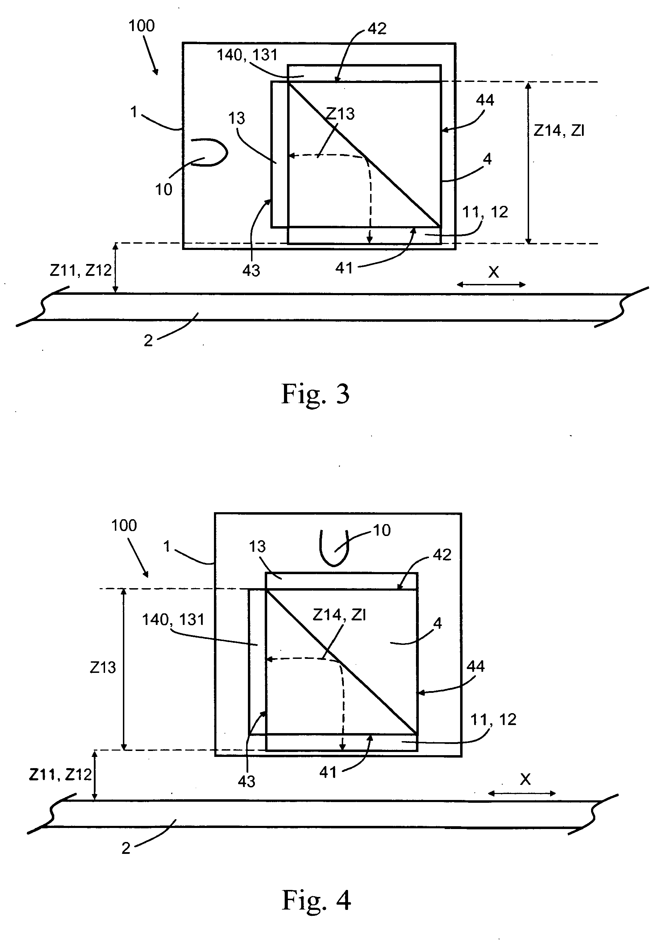

Figures 3 and 4 show two other different embodiments of the invention. In said embodiments the light falls on the graduated scale 2 perpendicularly and to achieve it the readhead 1 comprises a cube 4, preferably a polarized cube. The first graduated grating 11 and the second graduated grating 12 also form a single element, being disposed on a face of the cube 4 that faces the graduated scale 2, these being disposed between said cube 4 and said graduated scale 2.

In a third embodiment shown in Figure 3, the analyser 140 is disposed on a face 42 of the cube 4 opposite the face 41 that faces the graduated scale 2, and the third graduated grating 13 is disposed on a lateral face 43, 44 of said cube 4, the emitter 10 being disposed facing said third graduated grating 13.

In a fourth embodiment shown in Figure 4, the third graduated grating 13 is disposed on the face 42 of the cube 4 opposite the face 41 that faces the graduated scale 2, the emitter 10 emitting light in a substantially vertical plane on the third graduated grating 13. The analyser 140 is disposed on one of the lateral faces 43, 44 of said cube 4.

**Claims**

1. Readhead for a measuring device that comprises a graduated scale (2) with an incremental period (P2), the readhead (1) being movable with respect to the graduated scale (2) in a direction of movement (X) substantially parallel to said graduated scale (2), and comprising

a first graduated grating (11) with a determined period of grating (P11), that is disposed at a first distance (Z1) with respect to the graduated scale (2), a light emitter (10) that lights the graduated scale (2) through the first graduated grating (11), a first interaction (11) being generated between said first graduated grating (11) and the graduated scale (2), which gives as a result a distribution of light with a period of modulation (Pm) which is observed at a determined distance (Zm) with respect to said graduated scale (2) and which moves proportionally as said readhead (1) moves in relation to said graduated scale (2), and

an analyser (140) adapted for generating electrical signals representative of said movement in accordance with the light it receives,

a second graduated grating (12) with a second period of grating (P12) different and close to the period of modulation (Pm), which is disposed at a second distance (Z12) with respect to said graduated scale (2) substantially equal to the determined distance (Zm), resulting at said second distance (Z12) and as a result of the spatial superimposition between the second period (P12) and the period of modulation (Pm) a new distribution of light that corresponds with an image of the graduated scale (2) with a period of image (Pi) substantially greater than the incremental period (2) of said graduated scale (P2) and which moves proportionally as the readhead (1) moves in relation to the graduated scale (2),

**characterised in that**

the readhead (1) also comprises a third graduated grating (13), with a third period (P13) substantially greater than the incremental period (P2) of the graduated scale (2), which is disposed between the emitter (10) and the first graduated grating (11) at a third distance (Z13) in relation to the plane where the second graduated grating (12) is disposed, and which is lit by the light emitter (10), thereby a second interaction (12) between said third grating (13) and the image of the graduated scale (2) with period of image (Pi) being generated, which is projected on said second graduated grating (12), a distribution of light with a period of reading (PI) being obtained as a result of said second interaction (I2), which is observed at a determined distance (ZI) in relation to the plane where the image of said graduated scale (2) with period of image (Pi) is generated, and which moves proportionally as said readhead (1) moves in relation to said graduated scale (2), the analyser (140) being disposed in, or approximately in, the plane where the distribution of light with the period of reading (PI) is obtained.

2. Readhead according to claim 1, wherein the first graduated grating (11) and the second graduated grating (12) are disposed at a same distance (Z11, Z12) with respect to the graduated scale (2).

3. Readhead according to claim 2, wherein the period of grating (P11) of the first graduated grating (11) is equal to two times the incremental period (P2) of the graduated scale (2) and the second period (P12) of the second graduated grating (12) is different and close to the period (P11) of the first graduated grating (11).

4. Readhead according to claim 3, wherein the second period (P12) is smaller than the period (P11) of the first graduated grating (11).

5. Readhead according to claim 4, wherein the incremental period (P2) is approximately equal to 20 microns, the period of grating (P11) of the first graduated grating (11) is approximately equal to 40 microns and the second period (P12) is approximately equal to 34.5 microns.

6. Readhead according to claim 2, wherein the period (P11) of the first graduated grating (11) and the second period (P12) of the second graduated grating (12) are equal to each other and different and close to two times the incremental period (P2).

7. Readhead according to any of the preceding claims, wherein the first graduated grating (11) and the second graduated grating (12) form a single element.

8. Readhead according to any of claims 2 to 7, wherein the first distance (Z11) is a whole number of times equal to the Talbot distance (T) defined by the equation T=P11*P2/(n*m*λ), where λ corresponds with the wavelength of the light emitted by the light emitter (10), n and m with whole numbers, P2 with the incremental period (P2) of the graduated scale (2) and P11 with the period of grating (P11) of the first graduated grating (11).

9. Readhead according to any of the preceding claims, wherein the third period (P13) of the third grating (13) is equal to two times the period of image (Pi), and the analyser (140) and the third grating (13) are disposed at a same distance (Z13, Z14) with respect to the plane where the image of the graduated scale (2) with the period of image (Pi) is generated.

10. Readhead according to claim 9, wherein the analyser (140) comprises photodetector means (131) with a matrix of structured photodiodes with a specific fourth period (P14), adapted for accepting and generating electrical signals in accordance with the light they receive.

11. Readhead according to any of the preceding claims, wherein the arrangement of the emitter (10) enables the light to fall obliquely on the graduated scale (2) and wherein the first and second graduated gratings (11, 12) face said graduated scale (2), the second grating (12) receiving the light that is reflected on the graduated scale (2).

12. Readhead according to any of claims 1 to 9, wherein the light falls on the graduated scale (2) in a substantially vertical manner, the readhead (1) comprising a polarized cube (4), and the first and second graduated gratings (11, 12) being disposed on a first face (41) of the cube (4) that faces the graduated scale (2), the third graduated grating (13) on a lateral face (43, 44) of said cube (4) facing the emitter (10), and the analyser (140) on a second face (42) opposite the first face (41) of said cube (4).

13. Readhead according to any of claims 1 to 9, wherein the light falls on the graduated scale (2) in a substantially vertical manner, the readhead (1) comprising a polarized cube (4), and the first and second graduated gratings (11, 12) being disposed on a first face (41) of the cube (4) that faces the graduated scale (2), the third graduated grating (13) on a second face (42) opposite the first face (41) of said cube (4) and facing the emitter (10), and the analyser (140) on a lateral face (43, 44) of said cube (4).

14. Measuring device comprising a graduated scale (2), **characterised in that** it also comprises a readhead (1) according to any of the preceding claims.

**Patentansprüche**

1. Lesekopf für ein Messgerät, umfassend eine Teilstrichskala (2) mit einer schrittweisen Periode (P2), wobei der Lesekopf (1) im Verhältnis zur Teilstrichskala (2) in eine Bewegungsrichtung (X) verfahren werden kann, welche im Wesentlichen parallel zur Teilstrichskala (2) ist, und umfassend:

ein erstes Skalengitter (11) mit einer bestimmten Skalenperiode (P11), die in einem ersten Abstand (Z1) zur Teilstrichskala (2) angeordnet ist, einen Lichtsender (10), der die Teilstrichskala (2) durch das erste Skalengitter (11) beleuchtet, wobei eine erste Wechselwirkung (11) zwischen dem ersten Skalengitter (11) und der Teilstrichskala (2) erzeugt wird, die als Folge eine Verteilung des Lichtes mit einer Modulationsperiode (Pm) hat, welche in einem bestimmten Abstand (Zm) zur Teilstrichskala (2) beobachtet wird und sich im gleichen Verhältnis wie der Lesekopf (1) zur Teilstrichskala (2) bewegt, sowie ein Analysiergerät (140), welches ausgelegt ist für die Erzeugung von elektrischen Signalen, die die Bewegung je nach von ihm empfangenem Licht darstellt,

ein zweites Skalengitter (12) mit einer zweiten anderen Skalenperiode (P12) nah an der Modulationsperiode (Pm), die in einem zweiten Abstand (Z12) zur Teilstrichskala (2) angeordnet ist, der im Wesentlich gleich zum bestimmten Abstand (Zm) ist, was zu diesem zweiten Abstand (Z12) führt und infolge der räumlichen Überlagerung der zweiten Periode (P12) und der Modulationsperiode (Pm) zu einer neuen Verteilung des Lichtes, die einem Bild der Teilstrichskala (2) mit einer Bildperiode (Pi) entspricht, die wesentlich größer ist als die schrittweise Periode (2) der Teilstrichskala (P2) und die sich im gleichen Verhältnis wie der Lesekopf (1) zur Teilstrichskala (2) bewegt,

**dadurch gekennzeichnet, dass**

der Lesekopf (1) außerdem ein drittes Skalengitter (13) mit einer dritten Periode (P13) umfasst, die wesentlich größer ist als die schrittweise Periode (P2) der Teilstrichskala (2), welche zwischen dem Sender (10) und dem ersten Skalengitter (11) in einem dritten Abstand (Z13) zur Ebene angeordnet ist, in der das zweite Skalengitter (12) angeordnet ist, und vom Lichtsender (10) angestrahlt wird, sodass eine zweite Wechselwirkung (I2) zwischen dem dritten Gitter (13) und dem Bild der Teilstrichskala (2) entsteht und die Bildperiode (Pi) erzeugt wird, die auf das zweite Skalengitter (12) projiziert wird, wobei eine Verteilung des Lichtes mit einer Leseperiode (PI) ermittelt wird, infolge der zweiten Wechselwirkung (I2), die in einem bestimmten Abstand (ZI) zu der Ebene, in der das Bild der Teilstrichskala (2) mit der Bildperiode (Pi) erzeugt wird beobachtet wird, und der sich im gleichen Verhältnis wie der Lesekopf (1) zur Teilstrichskala (2) bewegt, wobei das Analysiergerät (140) auf oder ungefähr auf der Ebene angeordnet ist, auf der die Verteilung des Lichtes mit der Leseperiode (PI) ermittelt wird.

2. Lesekopf gemäß Anspruch 1, wobei das erste Skalengitter (11) und das zweite Skalengitter (12) im gleichen Abstand (Z11, Z12) zur Teilstrichskala (2) angeordnet sind.

3. Lesekopf gemäß Anspruch 2, wobei die Skalenperiode (P11) des ersten Skalengitters (11) gleich dem Doppelten der schrittweisen Periode (P2) der Teilstrichskala (2) ist und die zweite Periode (P12) des zweiten Skalengitters (12) anders und nah an der Periode (P11) des ersten Skalengitters (11) ist.

4. Lesekopf gemäß Anspruch 3, wobei die zweite Periode (P12) kleiner ist als die Periode (P11) des ersten Skalengitters (11).

5. Lesekopf gemäß Anspruch 4, wobei die schrittweise Periode (P2) ungefähr 20 Mikrometer groß ist, die Skalenperiode (P11) des ersten Skalengitters (11) ungefähr 40 Mikrometer und die zweite Periode (P12) ungefähr 34,5 Mikrometer groß ist.

6. Lesekopf gemäß Anspruch 2, wobei die Periode (P11) des ersten Skalengitters (11) und die zweite Periode (P12) des zweiten Skalengitters (12) untereinander gleich groß aber abweichend und annähernd gleich groß sind wie das Doppelte der schrittweisen Periode (P2).

7. Lesekopf gemäß einem der vorausgehenden Ansprüche, wobei das erste Skalengitter (11) und das zweite Skalengitter (12) ein einziges Element bilden.

8. Lesekopf gemäß einem der Ansprüche 2 bis 7, wobei der erste Abstand (Z11) eine ganze Zahl ist, die gleich dem Talbot-Abstand (T) ist, definiert durch die Gleichung

$$T = P1\,1 * P2/(n * m * A)\,,$$

wobei A der Wellenlänge des vom Lichtsender (10) abgegebenen Lichtes ist, n und m ganze Zahlen, P2 die schrittweise Periode (P2) der Teilstrichskala (2) und P11 die Skalenperiode (P11) des ersten Skalengitters (11).

9. Lesekopf gemäß einem der vorausgehenden Ansprüche, wobei die dritte Periode (P13) des dritten Gitters (13) gleich dem Doppelten der Bildperiode (Pi) ist, und das Analysiergerät (140) und das dritte Gitter (13) im gleichen Abstand (Z13, Z14) zu der Ebene angeordnet sind, in der das Bild der Teilstrichskala (2) mit der Bildperiode (Pi) erzeugt wird.

10. Lesekopf gemäß Anspruch 9, wobei das Analysiergerät (140) einen lichtempfindlichen Sensor (131) mit einer Matrix aus strukturierten lichtempfindlichen Dioden mit einer spezifischen vierten Periode (P14) umfasst, die für die Aufnahme und Erzeugung von elektrischen Signalen je nach dem von ihnen empfangenen Licht ausgelegt sind.

11. Lesekopf gemäß einem der vorausgehenden Ansprüche, wobei es die Anordnung des Senders (10) ermöglicht, dass das Licht schräg auf die Teilstrichskala (2) einfällt, und bei dem das erste und das zweite Skalengitter (11, 12) zur Teilstrichskala (2) blicken und das zweite Gitter (12) das Licht empfängt, das von der Teilstrichskala (2) reflektiert wird.

12. Lesekopf gemäß einem der Ansprüche 1 bis 9, wobei das Licht auf die Teilstrichskala (2) im Wesentliche vertikal einfällt, wobei der Lesekopf (1) einen polarisierten Würfel (4) umfasst und das erste und das zweite Skalengitter (11, 12) an einer ersten Seite (41) des Würfels (4) angeordnet sind, die zur Teilstrichskala (2) zeigt, das dritte Skalengitter (13) auf einer seitlichen Seite (43, 44) des Würfels (4) zum Sender (10) gewendet, und wobei das Analysiergerät (140) an einer zweiten Seite (42) gegenüber der ersten Seite (41) des Würfels (4) angeordnet ist.

13. Lesekopf gemäß einem der Ansprüche 1 bis 9, wobei das Licht auf die Teilstrichskala (2) im Wesentliche vertikal einfällt, wobei der Lesekopf (1) einen polarisierten Würfel (4) umfasst und das erste und das zweite Skalengitter (11, 12) an einer ersten Seite (41) des Würfels (4) angeordnet sind, die zur Teilstrichskala (2) zeigt, das dritte Skalengitter (13) auf einer zweiten Seite (42) des Würfels (4) gegenüber der ersten Seite (41) des Würfels (4) zum Sender (10) hin und das Analysiergerät (140) auf einer seitlichen Seite (43, 44) des Würfels (4) angeordnet ist.

14. Messgerät, umfassend eine Teilstrichskala (2), **dadurch gekennzeichnet, dass** es auch einen Lesekopf (1) gemäß einem der vorausgehenden Ansprüche umfasst.

**Revendications**

1. Tête de lecture pour dispositif de mesure qui comprend une échelle graduée (2) avec une période incrémentielle (P 2),
la tête de lecture (1) étant mobile par rapport à l'échelle graduée (2) dans un sens de mouvement (X) sensiblement parallèle à ladite échelle graduée (2) et comprenant :

une première grille graduée (11) avec une période de grille (P11) donnée qui est disposée à une première distance (Z1) par rapport à l'échelle graduée (2),
un émetteur de lumière (10) qui illumine l'échelle graduée (2) à travers la première grille graduée (11), une première interaction (I1) étant générée entre ladite première grille graduée (11) et l'échelle graduée (2), qui donne comme résultat une répartition de la lumière avec une période de modulation (Pm) qui est observée à une distance donnée (Zm) par rapport à la dite échelle graduée (2) et qui se déplace proportionnellement alors que ladite tête de lecture (1) se déplace par rapport à ladite échelle graduée (2),
un analyseur (140) adapté pour générer des signaux électriques représentant ledit mouvement par rapport à la lumière reçue, et
une seconde grille graduée (12) avec une seconde période de grille (P12) qui est différente et proche de la période de modulation (Pm) qui est disposée à une seconde distance (Z12) par rapport à l'échelle graduée (2) sensiblement égale à la distance donnée (Zm), se traduisant par ladite seconde distance (Z12) et résultant de la surimposition spatiale entre la seconde période (P12) et la période de modulation (Pm) en une nouvelle répartition de la lumière qui correspond à une image de l'échelle graduée (2) avec une période d'image (Pi) sensiblement supérieure à la période incrémentielle (2) de ladite échelle graduée (P2) et qui se déplace proportionnellement pendant que la tête de lecture (1) se déplace par rapport à l'échelle graduée (2).

**caractérisée en ce que**
la tête de lecture (1) comprend également une troisième grille graduée (13) avec une troisième période (P13) sensiblement supérieure à la période incrémentielle (P2) de l'échelle graduée (2) qui est disposée entre l'émetteur (10) et la première grille graduée (11) à une troisième distance (Z13) par rapport au plan où la seconde grille graduée (12) est disposée et qui est allumée par l'émetteur de lumière (10), d'où une seconde interaction (I2) entre ladite troisième grille (13) et l'image de l'échelle graduée (2) avec une période d'image (Pi) étant générée, qui est projetée sur ladite seconde grille graduée (12), une répartition de la lumière avec une période de lecture (PI) étant obtenue à la suite de ladite seconde interaction (I2) qui est observée à une distance donnée (ZI) par rapport au plan où l'image de ladite échelle graduée (2) avec une période d'image (Pi) est générée et qui se déplace proportionnellement alors que ladite tête de lecture (1) se déplace par rapport à ladite échelle graduée (2), l'analyseur (140) étant disposé dans ou environ dans le plan où la répartition de la lumière avec période de lecture (PI) est obtenue.

2. Tête de lecture selon la revendication 1 où la première grille graduée (11) et la seconde grille graduée (12) sont disposées à une même distance (Z11, Z12) de l'échelle graduée (2).

3. Tête de lecture selon la revendication 2 où la période de grille (P11) de la première grille graduée (11) est égale à deux fois la période incrémentielle (P2) de l'échelle graduée (2) et la seconde période (P12) de la seconde grille graduée (12) est différente et proche de la période (P11) de la première grille graduée (11).

4. Tête de lecture selon la revendication 3 où la seconde période (P12) est plus petite que la période (P11) de la première grille graduée (11).

5. Tête de lecture selon la revendication 4 où la période incrémentielle (P2) est approximativement égale à 20 microns, la période de grille (P11) de la première grille graduée (11) est approximativement égale à 40 microns et la seconde période (P12) est approximativement égale à 34,5 microns.

6. Tête de lecture selon la revendication 2 où la période (P11) de la première grille graduée (11) et la seconde période (P12) de la seconde grille graduée (12) sont égales et différentes et proches à deux fois la période incrémentielle (P2).

7. Tête de lecture selon l'une quelconque des revendications précédentes où la première grille graduée (11) et la seconde grille graduée (12) forment un seul et même élément.

8. Tête de lecture selon l'une quelconque des revendications 2 à 7 où la première distance (Z11) est un nombre entier de fois égal à la distance Talbot (T) définie par l'équation $T = P11*P2/(n*m*\lambda)$, où $\lambda$ correspond à la longueur d'onde de la lumière émise par l'émetteur de lumière (10), n et m étant des entiers, P2 étant la période incrémentielle (P2) de l'échelle graduée (2) et P11 étant la période de grille (P11) de la première grille graduée (11).

9. Tête de lecture selon l'une quelconque des revendications précédentes où la troisième période (P13) de la troisième grille (13) est égale à deux fois la période de l'image (Pi) et l'analyseur (140) et la troisième grille (13) sont disposés à une même distance (Z13 et Z14) du plan dans lequel l'image de l'échelle graduée (2) avec la période de l'image (Pi) est générée.

10. Tête de lecture selon la revendication 9 où l'analyseur (140) comprend un dispositif de photodétection (131) avec une matrice de photodiodes structurées avec une quatrième période spécifique (P14), adaptée pour accepter et générer des signaux électriques conformes à la lumière qu'ils reçoivent.

11. Tête de lecture selon l'une quelconque des revendications précédentes où la disposition de l'émetteur (10) permet à la lumière d'éclairer de manière oblique sur l'échelle graduée (2) et où les première et seconde grilles graduées (11, 12) font face à ladite grille graduée (2), la seconde grille (12) recevant la lumière qui est reflétée sur l'échelle graduée (2).

12. Tête de lecture selon l'une quelconque des revendications 1 à 9, où la lumière éclaire l'échelle graduée (2) d'une manière sensiblement verticale, la tête de lecture (1) comprenant un cube polarisé (4) et les première et seconde grilles graduées (11, 12) étant disposées sur une première paroi (41) du cube (4) qui fait face à l'échelle graduée (2), la troisième grille graduée (13) se trouvant sur une paroi latérale (43, 44) dudit cube (4) faisant face à l'émetteur (10) et l'analyseur (140) sur une seconde paroi (42) opposée à la première paroi (41) dudit cube (4).

13. Tête de lecture selon l'une quelconque des revendications 1 à 9 où la lumière éclaire l'échelle graduée (2) de manière sensiblement verticale, la tête de lecture (1) comprenant un cube polarisé (4) et les première et seconde grilles graduées (11, 12) étant disposées sur une première paroi (41) du cube (4) qui fait face à l'échelle graduée (2), la troisième grille graduée (13) sur une seconde paroi (42) à l'opposé de la première paroi (41) dudit cube (4) et faisant face à l'émetteur (10) et l'analyseur (140) sur une paroi latérale (43, 44) dudit cube (4).

14. Dispositif de mesure comprenant une échelle graduée (2), **caractérisé en ce qu'**il comprend également une tête de lecture (1) selon l'une quelconque des revendications précédentes.

Fig. 1

Fig. 2

Fig. 3

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1722200 B1
- EP 1775558 A1
- EP 0207121 B1